# EUROPÄISCHE PATENTSCHRIFT

(11) **EP 3 380 751 B1**
(45) Veröffentlichungstag und Bekanntmachung des Hinweises auf die Patenterteilung: **19.01.2022**
(21) Anmeldenummer: 16801226.8
(22) Anmeldetag: 24.11.2016
(51) Int. Cl.: F16G 13/06, F16J 15/16

(54) **GELENKKETTE, INSBESONDERE BUCHSENKETTE**
LINK CHAIN, IN PARTICULAR BUSH CHAIN
CHAÎNE ARTICULÉE, EN PARTICULIER CHAÎNE À DOUILLES

(30) Priorität: 25.11.2015 DE 102015120382
(43) Veröffentlichungstag der Anmeldung: 03.10.2018
(73) Patentinhaber: KettenWulf Betriebs GmbH, 59889 Eslohe-Kückelheim (DE)
(72) Erfinder: HEBBECKER, Thomas, 59799 Kirchhundem (DE); HANEMANN, Christian, 59872 Meschede (DE); PADBERG, Frank, 57392 Schmallenberg (DE); KEMPER, Stefan, 59872 Meschede (DE)
(74) Vertreter: Schäperklaus, Jochen
(86) Internationale Anmeldenummer: PCT/EP2016/078706
(87) Internationale Veröffentlichungsnummer: WO 2017/089478

(56) Entgegenhaltungen:
- EP-A1- 0 601 469
- DE-A1- 19 918 703
- US-A1- 2011 294 616

## Beschreibung

Die vorliegende Erfindung betrifft eine Gelenkkette, insbesondere eine Buchsenkette, vorzugsweise eine Förderkette, gemäß dem Oberbegriff des Anspruchs 1.

Eine Gelenkkette, insbesondere eine Buchsenkette, ist im Wesentlichen aus zwei endlos aneinander gereihten Elementen aufgebaut. Diese Elemente werden auch als Innen- und Außenglied bezeichnet. Ein Außenglied besteht in der Regel aus zwei Außenlaschen, welche durch zwei Bolzen fest miteinander verbunden sind. Ein Innenglied setzt sich in der Regel aus zwei Innenlaschen und zwei Buchsen zusammen, welche mit den Bolzen der benachbarten Außenglieder je ein Kettengelenk bilden. Diese Gelenke ermöglichen der Gelenkkette beispielsweise ein Umschlingen der im Antriebsstrang befindlichen Kettenräder.

Gelenkketten werden, neben zahlreichen anderen Anwendungen, gerne als Förderkette eingesetzt, wobei auf den verlängerten Bolzen oder den Buchsen Laufrollen angebracht sind und die Laschen oder zumindest einige Laschen dazu eingerichtet sind, mit Anbauteilen, wie beispielsweise Plattformen, verbunden zu werden. Hierzu sind die Laschen beispielsweise als Winkellaschen ausgeführt, die neben der eigentlichen Lasche einen Ausleger aufweisen, mit dem die Anbauteile verbunden werden können. Im Querschnitt ergibt sich eine beispielsweise L- förmige Lasche.

Beim Fördern von verschiedenen Gütern und Rohstoffen sind die Gelenkketten dem Fördergut selbst und den Einflüssen der Umwelt und Umgebung ausgesetzt. Dabei können Schmutz und andere Stoffe und Flüssigkeiten in das Kettengelenk eindringen und dort zu einem schnelleren und erhöhten Verschleiß beitragen.

Daher werden Kettengelenke in solchen Fällen oft abgedichtet. Ein Aufbau einer entsprechenden Gelenkkette bzw. Dichtungsanordnung ist beispielsweise aus der DE 27 26 033 A1 oder DE 36 29 591 A1 bekannt geworden.

In der Fig. 1 der DE 27 26 033 A1 ist erkennbar, dass die Dichtlippe einer dort skizzierten Dichtung auf der Stirnseite der Buchse anliegt bzw. abdichtet. Ein Distanzring soll verhindern, dass die Dichtung durch eine mechanische Überlast zerstört wird. Der Distanzring befindet sich zwischen Buchse und Außenlasche.

Eine derartige Dichtung hat den Vorteil, dass das Gelenk "öldicht" abgedichtet wird. Dies bedeutet, dass das Kettengelenk mit Schmiermitteln, wie Öl oder Fett, gefüllt werden kann und somit für einen großen Zeitraum ohne weitere Wartung betrieben werden kann. Die Gelenke sind somit dauergeschmiert. Das Einbringen des Öls erfolgt über übliche Schmierbohrungen im Bolzen.

Derartige Gelenkketten sind jedoch mit einigen Nachteilen behaftet.

Durch den Abstand zwischen Buchse und Außenlasche kann sich eine nicht unerhebliche Biegespannung im Bolzen unter Last ergeben. Ferner sind eine Durchbiegung der Bolzen und somit stärkere Kantenpressungen zwischen der Buchse und dem Bolzen zu erwarten. Aus der Bolzenbiegung und Kantenpressung wiederum können eine verringerte Dauerfestigkeit und maximal übertragbare Kettenzugkraft resultieren. Insgesamt sind ein größerer Verschleiß und eine geringere Bruchkraft zu erwarten.

Ferner muss die Buchse bzw. die Buchsenstirnseite die Aufgaben als Dichtfläche und als Buchse erfüllen. Dies erfordert einen Kompromiss der jeweilig benötigten Eigenschaften, insbesondere hinsichtlich Material und Fertigung, wodurch sich mitunter eine aufwändige Fertigung und erhöhte Materialkosten ergeben.

Ferner ergibt sich eine verringerte Kontaktfläche zwischen Bolzen und Außenlasche bei einer Aussparung in der Außenlasche, die an die vorgenannte Kontaktfläche angrenzt. Da die Außenlasche in der Regel auf den Bolzen aufgepresst wird, ergibt sich eine entsprechend kleinere Kontakt- bzw. Fügefläche, wodurch der Presssitz weniger Kräfte und Momente übertragen kann. Außerdem erhöht sich der Lochleibungsdruck an dieser Stelle im Laschenloch.

Gelenkketten der eingangs genannten Art mit einer Dichtungsanordnung zur Abdichtung des Kettengelenkes, die zwischen der Innenlasche und der Außenlasche der Gelenkkette angeordnet ist und eine Dichtung sowie einen Dichtungsaufnahmeraum umfasst, sind zum Beispiel aus der US 2011/294616 A1, aus der EP 0 601 469 A1 sowie aus der DE 199 18 703 A1 bekannt.

Die Aufgabe der vorliegenden Erfindung liegt entsprechend darin, eine verbesserte Gelenkkette vorzuschlagen, insbesondere eine Gelenkkette vorzuschlagen, die mindestens einen, vorzugsweise alle oben skizzierten Nachteile überwindet, mindestens aber Verbesserungen mit sich bringt. Insbesondere soll eine Gelenkkette vorgeschlagen werden, bei der die zu erwartende Biegespannung und/oder Kantenpressungen im/am Bolzen bereits durch konstruktive Maßnahmen reduziert werden können und/oder bei der für die Materialauswahl bzw. Bearbeitung der Buchse weniger oder keine Kompromisse eingegangen werden müssen, die aus der Verwendung der Buchsenstirnseite als Dichtfläche resultieren und/oder bei welcher vorzugsweise die gesamte Laschenstärke zur Kontaktfläche beiträgt.

Erfindungsgemäß wird diese Aufgabe durch eine Gelenkkette mit den kennzeichnenden Merkmalen des Anspruchs 1 gelöst. Dadurch, dass die Dichtungsanordnung - wie aus dem Stand der Technik bekannt-zwischen der Innenlasche und der Außenlasche angeordnet ist, kann die Dichtungsanordnung gewissermaßen aus dem Bereich der Buchse bzw. Buchsenstirnseite in den Bereich der Laschen verlagert werden. Dennoch kann ein öldichtes bzw. schmiermitteldichtes Kettengelenk realisiert werden. Die Dichtungsordnung liegt jedoch nicht mehr an der Stirnfläche der Buchse an. Da die Buchsenstirnseite dann nicht mehr als Dichtfläche benötigt wird, müssen keine Kompromisse mehr beispielsweise bei der Oberflächenbearbeitung, Materialauswahl, etc. im Hinblick auf die Buchse bzw. deren Stirnseite gemacht werden.

Zudem kann der Abstand zwischen Buchse und Außenlasche verkürzt werden, so dass die Buchse den Bolzen bis zu der Außenlasche überdecken kann. Dies trägt dazu bei, dass eine bessere Kraftübertragung zwischen Bolzen und Buchse erreicht werden kann und der Bolzen tendenziell weniger Durchbiegung erfahren wird. Auch muss beispielsweise keine Aussparung vorgesehen sein, welche die Kontaktfläche zwischen der Außenlasche und dem Bolzen verringert. Es kann die gesamte Laschenstärke als Kontaktfläche genutzt werden. Dadurch, dass die Dichtungsanordnung zwischen der Innenlasche und der Außenlasche und eben nicht mehr zwischen der Buchsenstirnseite und der Außenlasche angeordnet ist, befindet sich der Dichtungsaufnahmeraum für die Dichtung in radialer Richtung weiter von der Buchse entfernt. Dadurch entsteht ein größerer "Freiraum" zwischen Dichtung und Buchse. Dieser Rest-Raum kann mit Öl gefüllt sein. Es ergibt sich ein tendenziell größeres Schmiermittelreservoir, welches die Standzeit bzw. Wartungsintervalle der Gelenkkette verlängert. Die Dichtungsanordnung der Gelenkkette umfasst - wie aus dem Stand der Technik bekannt - eine Dichtung und einen Dichtungsaufnahmeraum. Der Dichtungsaufnahmeraum dient zur Aufnahme der Dichtung. Ferner kann der Dichtungsaufnahmeraum mit Schmiermitteln, wie beispielsweise Öl, Fett, etc., gefüllt werden und dient entsprechend als Reservoir für die Schmierung des Kettengelenks.

Erfindungsgemäß wird vorgeschlagen, dass der Dichtungsaufnahmeraum aus einer Anlaufscheibe und einer ringförmigen Aussparung, insbesondere in der Außenlasche ausgebildet ist, wobei ein Ring, der als Metallring ausgeführt ist, in dem Dichtungsaufnahmeraum angeordnet ist, oder dass der Dichtungsaufnahmeraum aus einer Anlaufscheibe und einer Aufnahmescheibe ausgebildet ist.

Die Variante, bei der der Dichtungsaufnahmeraum aus einer Anlaufscheibe und einer Aufnahmescheibe ausgebildet ist, stellt eine Möglichkeit zur Ausgestaltung des Dichtungsaufnahmeraums zwischen den Laschen dar. Vorteilhafterweise kann bei dieser Variante die Dichtfläche für die Dichtung vollständig durch die Anlaufscheibe gebildet werden. Insofern muss kein besonderes Augenmerk auf die Ausgestaltung der Laschenoberfläche als Dichtfläche gerichtet werden, so dass hier keine besondere Bearbeitung der Laschen stattfinden muss. Die Aufnahmescheibe kann entsprechend zur Aufnahme bzw. Halterung der Dichtung ausgebildet sein.

Die Variante, bei der der Dichtungsaufnahmeraum aus einer Anlaufscheibe und einer ringförmigen Aussparung, insbesondere in der Außenlasche, ausgebildet ist, stellt eine weitere Möglichkeit zur Ausgestaltung des Dichtungsaufnahmeraums zwischen den Laschen dar. Gewissermaßen wird die separate Aufnahmescheibe durch eine ringförmige Aussparung in einer der Laschen ersetzt. Der Vorteil dieser Ausgestaltung liegt in der Schaffung von Platz. Die Innen- und Außenlasche können näher aneinander liegen, da der Dichtungsaufnahmeraum teilweise in die Lasche eingebracht wird. Der Metallring kann zusammen mit der Dichtung eine Labyrinthdichtung ausbilden. Ferner kann der Ring den Dichtungsaufnahmeraum vergrößern.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass die Dichtungsanordnung radial außerhalb der Buchse angeordnet ist. Die Dichtungsordnung liegt entsprechend nicht mehr an der Stirnfläche der Buchse an. Da die Buchsenstirnseite dann nicht mehr als Dichtfläche benötigt wird, müssen keine Kompromisse mehr beispielsweise bei der Oberflächenbearbeitung, Materialauswahl, etc. im Hinblick auf die Buchse bzw. deren Stirnseite gemacht werden. Zudem kann der Abstand zwischen Buchse und Außenlasche verkürzt werden, so dass die Buchse den Bolzen bis zu der Außenlasche überdecken kann. Dies trägt dazu bei, dass eine bessere Kraftübertragung zwischen Bolzen und Buchse erreicht werden kann und der Bolzen tendenziell weniger Durchbiegung erfahren wird. Auch muss beispielsweise keine Aussparung vorgesehen sein, welche die Kontaktfläche zwischen der Außenlasche und dem Bolzen verringert. Dadurch, dass die Dichtungsanordnung zwischen der Innenlasche und der Außenlasche und eben nicht mehr zwischen der Buchsenstirnseite und der Außenlasche angeordnet ist, befindet sich der Dichtungsaufnahmeraum für die Dichtung in radialer Richtung weiter von der Buchse entfernt. Dadurch entsteht ein größerer "Freiraum" zwischen Dichtung und Buchse. Dieser Rest-Raum kann mit Öl gefüllt sein. Es ergibt sich ein tendenziell größeres Schmiermittelreservoir, welches die Standzeit bzw. Wartungsintervalle der Gelenkkette verlängert.

In einer weiteren vorteilhaften Ausgestaltung der Erfindung kann vorgesehen sein, dass die Buchse mit einem Überstand in Richtung der Außenlasche aus der Innenlasche hervorsteht. Ein derartiger Überstand kann zum Aufstecken einer Anlaufscheibe genutzt werden, die wiederum Teil der Dichtungsanordnung sein kann. Zudem kann über den Überstand erreicht werden, dass der Bolzen maximal von der Buchse überdeckt ist, so dass tendenziell größere Lasten, insbesondere Biegelasten, von dem Bolzen aufgenommen werden können. Der Überstand wirkt gewissermaßen als Verstärkung für den Bolzen. Zudem kann der Überstand als Distanzring zur Beabstandung der Außenlasche von der Innenlasche genutzt werden, so dass hier nicht zwangsläufig ein separater Distanzring eingelegt werden muss.

In einer weiteren vorteilhaften Ausgestaltung der Erfindung kann vorgesehen sein, dass die Buchsenstirnseite insbesondere unmittelbar vor der Außenlasche angeordnet ist. Es ist beispielsweise keine Dichtung zwischen Buchsenstirnseite und Außenlasche vorgesehen. Die Außenlasche kann sich entsprechend auf der Stirnseite der Buchse abstützen, wodurch ebenfalls ein Beitrag zur Aufnahme höherer Biegelasten, die auf den Bolzen einwirken, geleistet werden kann. Hieraus resultiert auch, dass weniger Bolzenbiegung und/oder weniger Kantenpressung zwischen Bolzen und Buchse vorliegt. Es ist jedoch vorzugsweise ein gewisses Spiel zwischen Buchsenstirnseite und Außenlasche vorhanden, damit das Kettengelenk frei drehen kann.

In einer weiteren vorteilhaften Ausgestaltung der Erfindung kann vorgesehen sein, dass die Anlaufscheibe oder die Aufnahmescheibe auf den Überstand der Buchse aufgesteckt ist. Der Überstand der Buchse, der aus der Innenlasche herausragt, kann als Anschlussmittel für die Anlaufscheibe oder die Aufnahmescheibe verwendet werden. Dies ermöglicht eine einfache und effektive Montage der in dem Dichtungsaufnahmeraum aufgenommenen Dichtung.

In einer weiteren vorteilhaften Ausgestaltung der Erfindung kann vorgesehen sein, dass die Laschen aus Halbzeugen, insbesondere Flachmaterial oder Blech, ausgeführt sind. Bei Laschen aus Halbzeugen, insbesondere aus Flachmaterial oder Blech, sind auch kleine Stückzahlen wirtschaftlich herstellbar. Ferner können nahezu beliebige Konturen und Baugrößen realisiert werden. Kundenwünsche und Einzelanfertigungen sind leicht und günstig zu realisieren. Denkbar ist jedoch ebenfalls, dass es sich bei den Laschen um geschmiedete Laschen handelt.

In einer weiteren vorteilhaften Ausgestaltung der Erfindung kann vorgesehen sein, dass die Buchse und/oder der Bolzen mit einer Schmiermitteleinfüllöffnung ausgestattet sind. Über diese Schmiermitteleinfüllöffnungen kann das Kettengelenk entsprechend mit Schmiermittel befüllt werden.

In einer weiteren vorteilhaften Ausgestaltung der Erfindung kann vorgesehen sein, dass die Buchse und/oder der Bolzen mit Schmiermittelaufnahmeeinrichtungen, insbesondere Nuten, Flächen oder Bohrungen, ausgestattet sind. Die Schmiermittelaufnahmeeinrichtungen, die beispielsweise als Nuten, Flächen oder Bohrungen auf dem Bolzen bzw. der Innenwand der Buchse angeordnet sein können, dienen als Reservoir für das Schmiermittel innerhalb des Kettengelenks. Letztendlich wird die Gelenkkette damit wartungsärmer und gegebenenfalls. sogar wartungsfrei.

In einer weiteren vorteilhaften Ausgestaltung der Erfindung kann vorgesehen sein, dass der Dichtungsaufnahmeraum mit einem Schmiermittel, insbesondere Öl oder Fett, befüllt ist. Der Dichtungsaufnahmeraum kann als Schmiermittelreservoir für das Kettengelenk dienen und dessen langfristige Schmierung gewährleisten.

In diesem Zusammenhang kann vorteilhafterweise vorgesehen sein, dass die Buchse stirnseitig radiale Nuten aufweist. Hierdurch kann Schmiermittel aus dem Dichtungsaufnahmeraum in die Schmiermittelaufnahmeeinrichtungen und vice versa transportiert werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine erfindungsgemäße Gelenkkette in einer perspektivischen Darstellung;
- Fig. 2: eine erfindungsgemäße Gelenkkette mit einer Aussparung und einer Anlaufscheibe, die den Dichtungsaufnahmeraum bilden, in einer Querschnittsdarstellung;
- Fig. 3: eine vergrößerte Detaildarstellung einer Einzelheit gemäß Fig. 2;
- Fig. 4: eine erfindungsgemäße Gelenkkette in einer weiteren Ausführungsform mit einer Anlaufscheibe und einer Aufnahmescheibe, die den Dichtungsaufnahmeraum bilden, in einer Querschnittsdarstellung;
- Fig. 5: eine erfindungsgemäße Gelenkkette in einer weiteren Ausführungsform mit einer in einer Aussparung aufgenommenen Anlaufscheibe und einer Aussparung, die den Dichtungsaufnahmeraum bilden, in einer Querschnittsdarstellung;
- Fig. 6: eine erfindungsgemäße Gelenkkette mit einer Aussparung und einer Anlaufscheibe, die den Dichtungsaufnahmeraum bilden, in einer Querschnittsdarstellung;

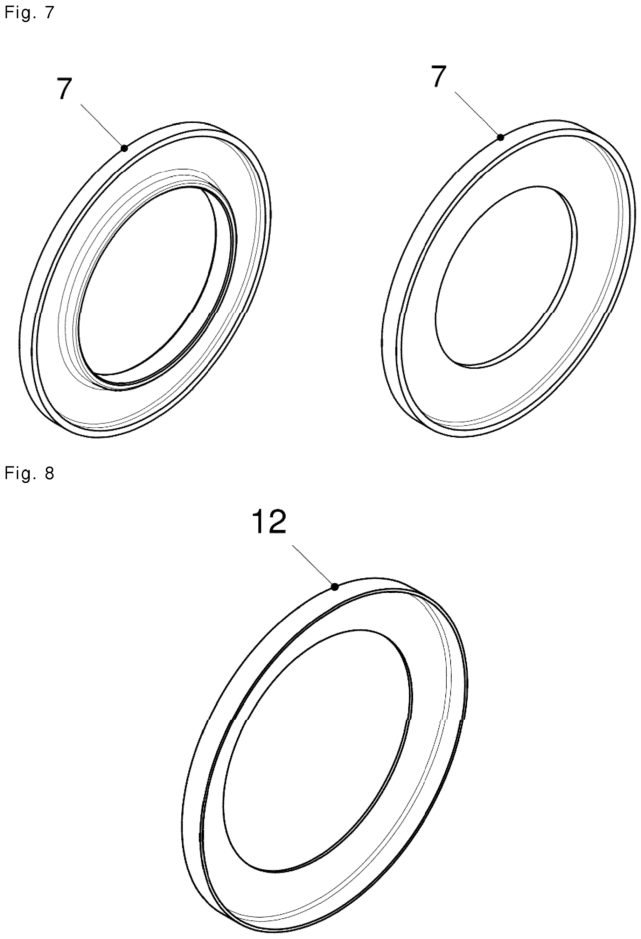

- Fig. 7: eine Anlaufscheibe in einer perspektivischen Darstellung, jeweils in einer Ausführung mit rinnenförmigem Querschnitt und L-förmigem Querschnitt;
- Fig.8: eine Aufnahmescheibe in einer perspektivischen Darstellung;

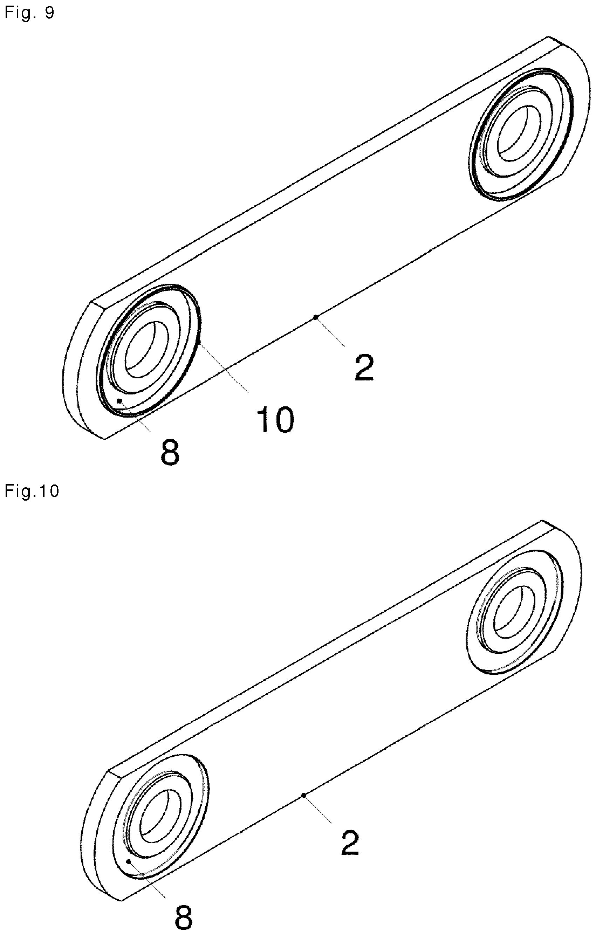

- Fig. 9: eine Lasche mit Aussparungen und jeweils einem eingesetzten Ring in einer perspektivischen Darstellung;
- Fig. 10: eine Lasche mit Aussparungen in einer perspektivischen Darstellung.

Folgende Bezugszeichen werden in den Abbildungen verwendet:
- 1: Innenlasche
- 2: Außenlasche
- 3: Buchse
- 4: Bolzen
- 5: Rolle
- 6: Anschlusselement
- 7: Anlaufscheibe
- 8: Aussparung / Ringnut
- 9: Dichtung
- 10: Ring
- 11: Dichtungsaufnahmeraum
- 12: Aufnahmescheibe
- 13: Aussparung

- 31: Überstand
- 32: Nut

- 41: Absatz
- 42: Kanal
- 43: Schmiermitteleinfüllöffnung
- 44: Schmiermittelaufnahmeeinrichtung

Der Aufbau einer Gelenkkette ist dem Fachmann hinreichend bekannt.

Eine Gelenkkette, insbesondere eine Buchsenkette, ist im Wesentlichen aus zwei aneinander gereihten Elementen aufgebaut. Diese Elemente werden auch als Innen- und Außenglied bezeichnet. Ein Außenglied besteht in der Regel aus zwei Außenlaschen 2, welche durch zwei Bolzen 4 miteinander verbunden sind. Ein Innenglied setzt sich in der Regel aus zwei Innenlaschen 1 zusammen, die mittels zweier Buchsen 3 miteinander verbunden sind. Jeweils eine Buchse 3 und ein in die Buchse 3 eingesteckter Bolzen 4 benachbarter Kettenglieder bilden ein Kettengelenk. Diese Gelenke ermöglichen der Gelenkkette beispielsweise ein Umschlingen der im Antriebsstrang befindlichen Kettenräder. Die vorgenannte Ausführungsform bildet eine einfache Gelenkkette. Denkbar sind selbstverständlich auch mehr Laschen pro Innen- bzw. Außenglied. Denkbar sind auch weniger Laschen pro Kettenglied, etwa bei einer Blocklasche bzw. Blocklaschenkette. Die erfindungsgemäße Kette kann mit geraden oder gekröpften Laschen ausgestattet sein. Es kommen insbesondere alle Bauformen einer Buchsenförderkette in Frage.

Bei einer Verwendung als Förderkette sind vorzugsweise verlängerte Bolzen 4 oder Buchsen 3 mit entsprechenden Laufrollen 5 versehen und/oder die Laschen, insbesondere die Innenlaschen 1 und/oder die Außenlaschen 2, mit entsprechenden Anschlusselementen 6 ausgestattet. Hieran können dann Transporteinrichtungen, wie beispielsweise Plattformen oder ähnliches, angeschlossen werden.

Als Material für die Laschen 1, 2, Bolzen 4 und Buchsen 3 kommen grundsätzlich metallische Werkstoffe in Frage. Denkbar sind aber auch nichtmetallische Werkstoffe, wie hochfeste Kunststoffe, etc. Die Laschen 1, 2 können fertigungstechnisch aus Halbzeugen, insbesondere Flachmaterial oder Blech, oder auch als Schmiedeteil oder Gussteil ausgeführt sein. Auch ein Spritzguss oder 3D-Druck aus Kunststoff oder anderen geeigneten Materialien kommt in Frage. Es ist weiter vorzugsweise vorgesehen, dass das Bolzenende mit einem Absatz 41 zur Verbindung mit der Außenlasche 2 ausgestattet ist. Durch den sich ergebenden Anschlag ist eine sehr genaue Montage der Außenlaschen 2 möglich.

Der für die vorliegende Erfindung im Wesentlichen wichtige Bereich ist der Bereich zwischen einer Innenlasche 1 und einer Außenlasche 2. Insofern umfasst die erfindungsgemäße Gelenkkette mindestens eine Innenlasche 1 mit einer Buchse 3 sowie eine Außenlasche 2 mit einem Bolzen 4. Der Bolzen 4 ist in die Buchse 3 eingesteckt und bildet ein Kettengelenk aus. Die erfindungsgemäße Gelenkkette weist ferner eine Dichtungsanordnung auf, die zur Abdichtung des aus Buchse 3 und Bolzen 4 gebildeten Kettengelenkes vorgesehen ist.

Erfindungsgemäß ist vorgesehen, dass die Dichtungsanordnung zwischen der Innenlasche 1 und der Außenlasche 2, insbesondere radial außerhalb der Buchse 3, angeordnet ist.

Eine Dichtungsanordnung einer erfindungsgemäßen Gelenkkette umfasst im Wesentlichen einen Dichtungsaufnahmeraum 11 und eine Dichtung 9, die in dem Dichtungsaufnahmeraum 11 aufgenommen ist. Der Dichtungsaufnahmeraum 11 ist entsprechend zwischen den Laschen 1, 2 und radial außerhalb der Buchse 3 angeordnet.

Der Dichtungsaufnahmeraum 11 dient insbesondere der Aufnahme der Dichtung 9 und kann auf unterschiedliche Weise ausgebildet werden.

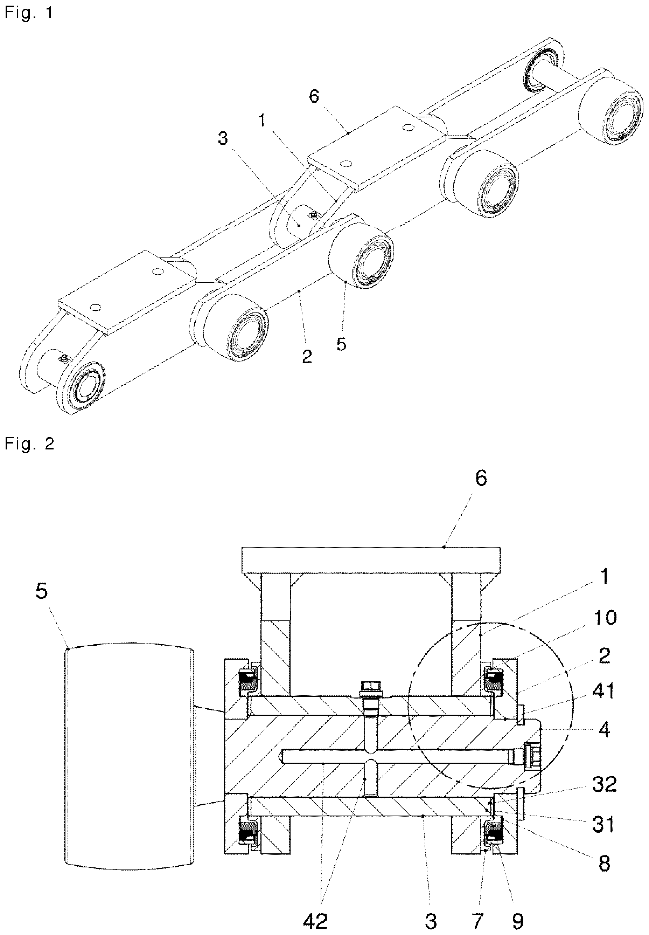

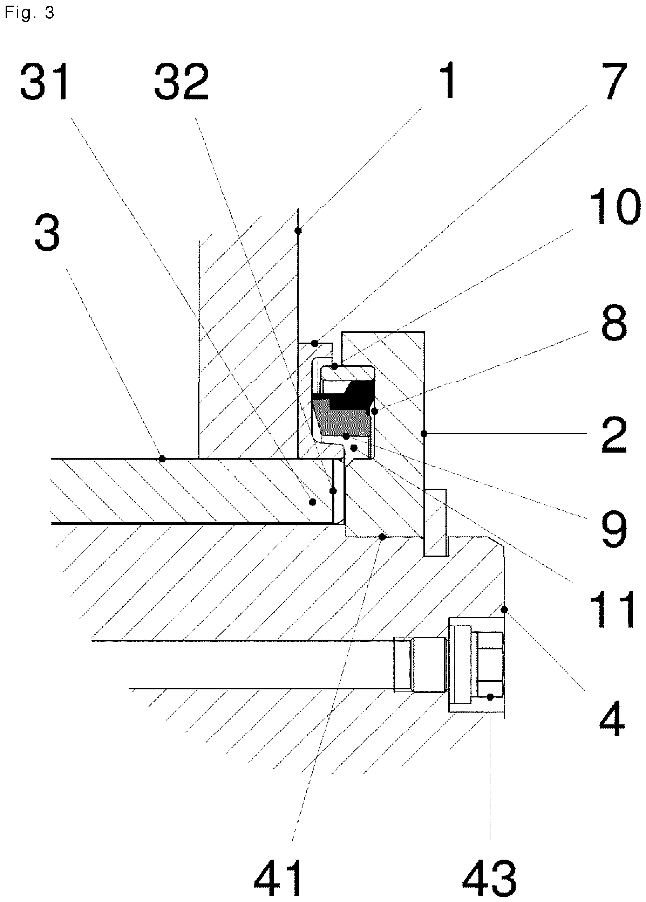

In einer bevorzugten Ausführungsform umfasst der Dichtungsaufnahmeraum eine Anlaufscheibe 7 und eine ringförmige Aussparung 8. Bevorzugt ist die Aussparung 8 in der Außenlasche 2 und die Anlaufscheibe 7 vor der Innenlasche 1 angeordnet. Eine derartige Ausführungsform ist insbesondere in den Fig. 2 und 3 dargestellt. Es ist jedoch auch grundsätzlich eine Anordnung vice versa denkbar.

Die Anlaufscheibe 7, die auch als Anlaufring bezeichnet werden könnte, weist vorzugsweise in etwa einen Querschnitt in Form einer kastenförmigen Rinne auf. Mit anderen Worten weist die Anlaufscheibe 7 in ihrem Querschnitt eine gerade Grundseite und zwei sich von der Grundseite, insbesondere von deren Enden, erstreckende Schenkel auf. Die Schenkel können unterschiedlich lang ausgestaltet sein. Die Anlaufscheibe 7 kann auch andere Formen aufweisen. Sie kann beispielsweise flach, also mit einem rechteckförmigen Querschnitt, ausgestaltet sein. Auch ein L-förmiger Querschnitt ist denkbar.

Vorzugsweise ist vorgesehen, dass die Buchse 3 mit einem Überstand 31, sprich mit einem Überstand als Maß vom Buchsenende bis zur Oberfläche der Innenlasche 1, der auch als Vorsprung bezeichnet werden könnte, ausgestattet ist, der aus der Innenlasche 1 hervorsteht. Vorzugsweise ist die Anlaufscheibe 7 auf diesen, aus der Innenlasche 1 herausragenden Überstand der Buchse 3 aufgesteckt und entsprechend vor der Innenlasche 1 angeordnet. Vorzugsweise ist der Innenradius der Dichtungsanordnung, insbesondere der Dichtung 9, größer als der Außenradius der Buchse 3, insbesondere des Buchsenüberstands 31. Die Befestigung der Anlaufscheibe 7 erfolgt vorzugsweise durch Presssitz auf der Buchse 3 bzw. dem Überstand 31 oder sonstige kraft- oder formschlüssige Anbringung. Der Überstand 31 kann, neben einer Aufnahme für die Anlaufscheibe 7, die Aufgabe eines Distanzrings erfüllen und schützt die Dichtung 9 vor einer mechanischen Überlast.

Die ringförmige Aussparung 8, die auch als Ringnut bezeichnet werden könnte, weist im Querschnitt ebenfalls die Form einer kastenförmigen Rinne auf. Insofern weist die Aussparung 8 vorzugsweise einen Boden und zwei senkrechte Seitenflächen auf.

In einem montierten Zustand stehen sich die Anlaufscheibe 7 und die ringförmige Aussparung 8 mit ihren jeweiligen Öffnungen gegenüber, so dass sich zwischen der Anlaufscheibe 7 und der ringförmigen Aussparung 8 ein Dichtungsaufnahmeraum 11 ergibt.

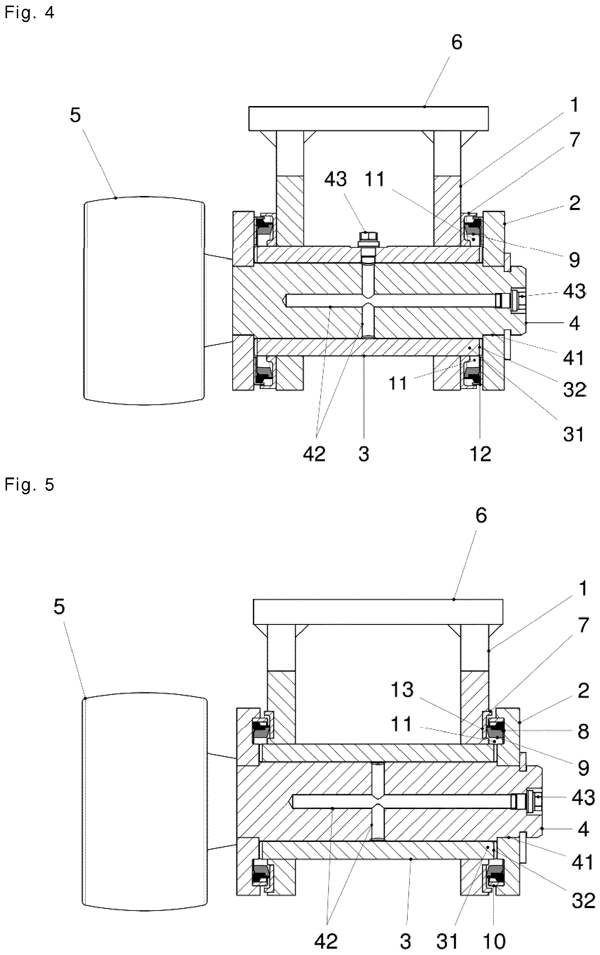

Alternativ kann der Dichtungsaufnahmeraum 11 auch durch eine Anlaufscheibe 7 und eine Aufnahmescheibe 12 gebildet werden. In diesem Fall kann auf eine ringförmige Aussparung 8 in der Lasche verzichtet werden. Die Aufnahmescheibe 12, die auch als Aufnahmering bezeichnet werden könnte, dient in diesem Fall vornehmlich der Halterung der Dichtung 9 innerhalb des Dichtungsaufnahmeraums 11. Auch hier kann die Anlaufscheibe 7 bzw. Aufnahmescheibe 12 wahlweise an der Innenlasche 1 oder Außenlasche 2 angeordnet sein. Bevorzugt ist die Anlaufscheibe 7 jedoch vor der Innenlasche 1 und die Aufnahmescheibe 12 vor der Außenlasche 2 angeordnet. Eine derartige Ausführungsform ist in der Fig. 4 dargestellt. Die Anlaufscheibe 7 bildet zudem zusammen mit der Aufnahmescheibe 12 ein Labyrinth bzw. eine Labyrinthdichtung aus, welche die Dichtung 9 schützt.

Weiter alternativ kann der Dichtungsaufnahmeraum 11 auch durch eine in einer ringförmigen Aussparung 13 aufgenommene Anlaufscheibe 7 und eine ringförmige Aussparung 8 gebildet werden. Bevorzugt ist die ringförmige Aussparung 8 in der Außenlasche 2 und die ringförmige Aussparung 13 mit der Anlaufscheibe 7 in der Innenlasche 1 vorgesehen. Eine derartige Ausführungsform ist in der Fig. 5 dargestellt. Die hier verwendete Anlaufscheibe 7 weist beispielsweise einen L-förmigen Querschnitt auf.

Im Ergebnis, insbesondere in Zusammenschau der vorgenannten Ausführungsbeispiele, ergibt sich ein Dichtungsaufnahmeraum 11, vorzugsweise mit rechteckförmigem Querschnitt, der den Bereich um die Buchse 3 bzw. den Überstand 31 der Buchse 3 umrundet. Im Wesentlichen übernimmt die Anlaufscheibe 7 die Funktion einer Dichtfläche, sprich diejenige Fläche, an welcher die Dichtung drückt und schleift. Die Dichtung 9 und die Anlaufscheibe 7 bzw. bearbeitete Laschenoberfläche ergeben vorzugsweise eine nach außen öldichte, zumindest aber überwiegend öldichte Dichtungsanordnung. Als Werkstoff für die Anlaufscheibe 7 kommt vorzugsweise Stahl, rostfreier Stahl oder Einsatzstahl in Frage. Hier sind mannigfaltige Möglichkeiten denkbar. An die jeweils die Dichtfläche bildenden Elemente, sprich die Anlaufscheibe 7, sollten einige Anforderungen gestellt werden. Sie sollten gehärtet und feinst bearbeitet werden, um ein schnelles Verschleißen der Dichtung, aber auch der Anlaufscheibe 7 selbst zu verhindern. Auch Beschichten oder andere mechanische Bearbeitung ist denkbar. Vorzugsweise weist die Dichtfläche der Anlaufscheibe 7 eine nicht allzu große Oberflächenrauhigkeit auf. Die Oberflächenrauhigkeit kann durch geeignete Bearbeitungsmaßnahmen eingestellt werden. Letztendlich ist jedoch die Bearbeitung bzw. Produktion einer Anlaufscheibe 7 einfacher als eine entsprechende Bearbeitung der Lasche als Dichtfläche. Auch hier muss kein besonderes Augenmerk auf die Auswahl des Laschenwerkstoffs bezüglich seiner Eignung als Dichtfläche gerichtet werden, da die Dichtfläche durch ein separates Teil, hier die Anlaufscheibe 7, bereitgestellt wird. Auch ist denkbar, statt der Anlaufscheibe 7 die jeweilige Laschenoberfläche entsprechend zu bearbeiten, dass sie als Dichtfläche dienen kann. Als Bearbeitung kommt beispielsweise eine Beschichtung auf der jeweiligen Laschenfläche in Frage, aber auch andere Bearbeitungsverfahren, wie Härten, Wärmebehandlung, mechanische Bearbeitung, etc.

Die ringförmige Aussparung 8 bzw. die Aufnahmescheibe 12 dient vornehmlich der Halterung der Dichtung 9 innerhalb des Dichtungsaufnahmeraums.

Bei der Dichtung 9 handelt es sich vorzugsweise um einen Dichtungsring bzw. eine ringförmige Dichtung. Die Dichtung 9 soll das Eindringen von Schmutz in das Kettengelenk sowie das Austreten von Schmiermittel/Öl aus dem Kettengelenk heraus verhindern. Die Dichtung 9 sollte entsprechende federnde Eigenschaften aufweisen, sodass immer ein definierter Kontakt/Druck zwischen der Dichtung 9 und der jeweiligen Dichtfläche vorliegt. Dies könnte auch durch ein separates federndes Element erreicht werden. Als Dichtung 9 kommt beispielsweise eine Dichtung in Frage, die aus drei Komponenten besteht.

In den Dichtungsaufnahmeraum 11 kann neben der Dichtung 9 auch ein Ring 10, vorzugsweise ein Metallring, eingelegt sein. Der Ring 10 kann beispielsweise zusammen mit der Anlaufscheibe 7 bzw. dem Schenkel der Anlaufscheibe eine Labyrinthdichtung ausbilden. Aber auch eine andere Paarung, beispielsweise zusammen mit der ringförmigen Aussparung 8 der gegenüberliegenden Lasche ist denkbar. Zusätzlich kann der Ring 10 als Montagehilfe und/oder mechanischen Schutz für die Dichtung 9 fungieren. Die Buchse 3 bzw. der Überstand 31 trägt zur Begrenzung des axialen Spiels durch Anlaufen gegen die Außenlasche 2 bei.

Wie bereits oben dargelegt, dichtet die Dichtung 9 das Kettengelenk im technisch darstellbaren Maße schmiermitteldicht ab. Insofern kann das Kettengelenk mit Schmiermittel gefüllt sein. Als Schmiermittel kommt beispielsweise Öl oder Fett in Frage.

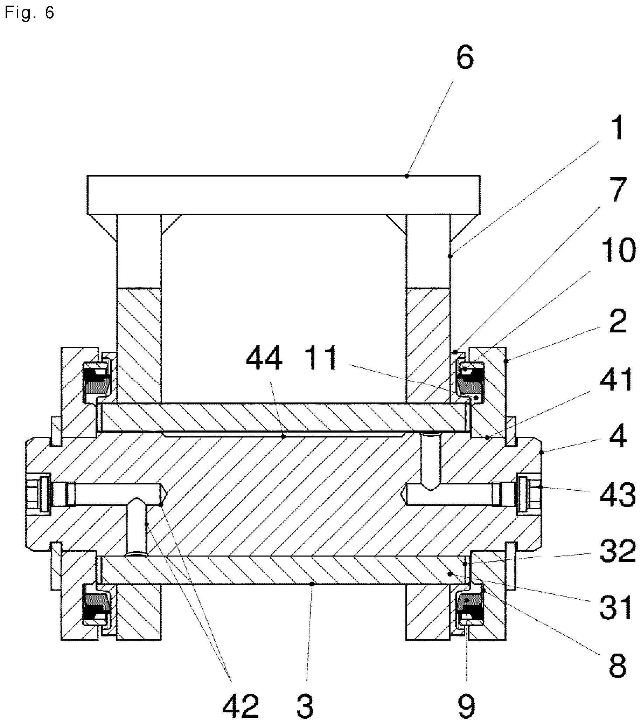

Vorzugsweise wird das Schmiermittel über Schmiermitteleinfüllöffnungen 43 eingefüllt, die in der Buchse 3 und/oder dem Bolzen 4 vorgesehen sein können. In dem Ausführungsbeispiel gemäß Fig. 2 und 3 sind beispielsweise Schmiermitteleinfüllöffnungen 43 sowohl im Bolzen 3 als auch in der Buchse 4 vorgesehen. In der Ausführungsform gemäß Fig. 6 sind beispielsweise zwei Schmiermitteleinfüllöffnungen 43 in beiden Stirnseiten des Bolzens 4 vorgesehen.

Es kann ferner vorgesehen sein, dass die Buchse 3 und/oder der Bolzen 4 mit Schmiermittelaufnahmeeinrichtungen 44, wie beispielsweise Nuten, Flächen oder Bohrungen, ausgestattet ist. Im Wesentlichen dienen die Schmiermittelaufnahmeeinrichtungen 44 dazu, das Schmiermittel zwischen Buchse 3 und Bolzen 4 vorzuhalten. Es sind vorzugsweise Kanäle 42 im Bolzen 4 bzw. der Buchse 3 zwischen den Schmiermitteleinfüllöffnungen 43 und den Schmiermittelaufnahmeeinrichtungen 44 vorgesehen, durch die das eingefüllte Schmiermittel zu den Schmiermittelaufnahmeeinrichtungen 44 gelangen kann. Die Schmiermitteleinfüllöffnungen 43 können beispielsweise mittels geeigneter Nippel oder Schrauben verschlossen werden. Auch die Kanäle 42 als solche können als Reservoir für Schmiermittel dienen. Letztendlich wird das Schmiermittel innerhalb des Kettengelenkes verteilt.

Auch ist vorzugsweise vorgesehen, dass der Dichtungsaufnahmeraum 11 mit einem Schmiermittel befüllt ist. Das hier aufgenommene Schmiermittel dient im Wesentlichen als Schmiermittelreservoir für das Kettengelenk und zum Benetzen der Dichtung 9 mit Schmiermittel. In diesem Zusammenhang kann vorzugsweise vorgesehen sein, dass die Buchse 3 stirnseitig radiale Nuten 32 aufweist. Über diese Nuten 32 kann Schmiermittel zwischen dem Dichtungsaufnahmeraum 11 und dem Kettengelenk ausgetauscht werden.

## Patentansprüche

1. Gelenkkette, insbesondere Buchsenkette, umfassend
- eine Innenlasche (1) mit einer Buchse (3),
- eine Außenlasche (2) mit einem Bolzen (4), wobei
- Bolzen (4) und Buchse (3) ein Kettengelenk ausbilden, wobei
- eine Dichtungsanordnung zur Abdichtung des Kettengelenkes vorgesehen ist,
wobei die Dichtungsanordnung zwischen der Innenlasche (1) und der Außenlasche (2) angeordnet ist und wobei die Dichtungsanordnung eine Dichtung (9) und einen Dichtungsaufnahmeraum (11) umfasst,
**dadurch gekennzeichnet, dass**
der Dichtungsaufnahmeraum (11) aus einer Anlaufscheibe (7) und einer ringförmigen Aussparung (8), insbesondere in der Außenlasche (2), ausgebildet ist, wobei ein Ring (10), der als Metallring ausgeführt ist, in dem Dichtungsaufnahmeraum (11) angeordnet ist, oder dass der Dichtungsaufnahmeraum (11) aus einer Anlaufscheibe (7) und einer Aufnahmescheibe (12) ausgebildet ist.

2. Gelenkkette nach Anspruch 1, **dadurch gekennzeichnet, dass** die Dichtungsanordnung radial außerhalb der Buchse (3) angeordnet ist.

3. Gelenkkette nach einem der Ansprüche 1 oder 2, **dadurch gekennzeichnet, dass** die Buchse (3) mit einem Überstand (31) ausgestattet ist, der aus der Innenlasche (1) hervorsteht.

4. Gelenkkette nach einem der Ansprüche 1 bis 3, **dadurch gekennzeichnet, dass** die Buchsenstirnseite vor der Außenlasche (2) angeordnet ist.

5. Gelenkkette nach einem der Ansprüche 3 oder 4, **dadurch gekennzeichnet, dass** die Anlaufscheibe (7) oder die Aufnahmescheibe (12) auf den Überstand (31) der Buchse (3) aufgesteckt ist.

6. Gelenkkette nach einem der Ansprüche 1 bis 5, **dadurch gekennzeichnet, dass** die Laschen (1, 2) aus Halbzeugen, insbesondere Flachmaterial oder Blech, ausgeführt sind.

7. Gelenkkette nach einem der Ansprüche 1 bis 6, **dadurch gekennzeichnet, dass** die Buchse (3) und/oder der Bolzen (4) mit mindestens einer Schmiermitteleinfüllöffnung (43) ausgestattet sind.

8. Gelenkkette nach einem der Ansprüche 1 bis 7, **dadurch gekennzeichnet, dass** die Buchse (3) und/oder der Bolzen (4) mit Schmiermittelaufnahmeeinrichtungen (44), insbesondere Nuten, Flächen oder Bohrungen, ausgestattet sind.

9. Gelenkkette nach einem der Ansprüche 1 bis 8, **dadurch gekennzeichnet, dass** die Buchse (3) stirnseitig radiale Nuten (32) aufweist.

10. Gelenkkette nach einem der Ansprüche 1 bis 9, **dadurch gekennzeichnet, dass** der Dichtungsaufnahmeraum (11) mit einem Schmiermittel, insbesondere Öl, befüllt ist.

## Claims

1. Link chain, in particular bush chain, comprising
- an inner link plate (1) with a bush (3),
- an outer link plate (2) with a pin (4), wherein
- pin (4) and bush (3) configure a chain joint, wherein
- a sealing arrangement is provided for sealing the chain joint,
wherein the sealing arrangement is arranged between the inner link plate (1) and the outer link plate (2) and wherein the sealing arrangement comprises a seal (9) and a seal receiving space (11),
**characterised in that**
the seal receiving space (11) is configured from a thrust washer (7) and an annular recess (8), in particular in the outer link plate (2), wherein a ring (10), in the form of a metal ring, is arranged in the seal receiving space (11), or **in that** the seal receiving space (11) is configured from a thrust washer (7) and a receiving washer (12).

2. Link chain according to claim 1, **characterised in that** the sealing arrangement is arranged radially outwardly of the bush (3).

3. Link chain according to any one of claims 1 or 2, **characterised in that** the bush (3) is provided with a projection (31), which protrudes from the inner link plate (1).

4. Link chain according to any one of claims 1 to 3, **characterised in that** the end face of the bush is arranged in front of the outer link plate (2).

5. Link chain according to any one of claims 3 or 4, **characterised in that** the thrust washer (7) or the receiving washer (12) is fitted onto the projection (31) of the bush (3).

6. Link chain according to any one of claims 1 to 5, **characterised in that** the link plates (1, 2) are made of semi-finished products, in particular flat material or sheet metal.

7. Link chain according to any one of claims 1 to 6, **characterised in that** the bush (3) and/or the pin (4) are provided with at least one lubricant filling opening (43).

8. Link chain according to any one of claims 1 to 7, **characterised in that** the bush (3) and/or the pin (4) are equipped with lubricant receiving devices (44), in particular grooves, surfaces or bores.

9. Link chain according to any one of claims 1 to 8, **characterised in that** the bush (3) has radial grooves (32) on the end face.

10. Link chain according to any one of claims 1 to 9, **characterised in that** the seal receiving space (11) is filled with a lubricant, in particular oil.

## Revendications

1. Chaîne articulée, en particulier chaîne à douilles, comprenant
- une patte intérieure (1) avec une douille (3),
- une patte extérieure (2) avec un axe (4), dans laquelle
- l'axe (4) et la douille (3) réalisent une articulation à chaîne, dans laquelle
- un agencement d'étanchéité est prévu pour rendre étanche l'articulation à chaîne,
dans laquelle l'agencement d'étanchéité est agencé entre la patte intérieure (1) et la patte extérieure (2) et dans laquelle l'agencement d'étanchéité comprend un joint d'étanchéité (9) et un espace de réception de joint d'étanchéité (11),
**caractérisée en ce que**
l'espace de réception de joint d'étanchéité (11) est réalisé à partir d'un disque de butée (7) et d'un évidement (8) annulaire, en particulier dans la patte extérieure (2), dans laquelle un anneau (10) qui est exécuté comme anneau métallique, est agencé dans l'espace de réception de joint d'étanchéité (11), ou que l'espace de réception de joint d'étanchéité (11) est réalisé à partir d'un disque de butée (7) et d'un disque de réception (12).

2. Chaîne articulée selon la revendication 1, **caractérisée en ce que** l'agencement d'étanchéité est agencé radialement vers l'extérieur de la douille (3).

3. Chaîne articulée selon l'une quelconque des revendications 1 ou 2, **caractérisée en ce que** la douille (3) est équipée d'un porte-à-faux (31) qui dépasse de la patte intérieure (1).

4. Chaîne articulée selon l'une quelconque des revendications 1 à 3, **caractérisée en ce que** le côté avant de douille est agencé avant la patte extérieure (2).

5. Chaîne articulée selon l'une quelconque des revendications 3 ou 4, **caractérisée en ce que** le disque de butée (7) ou le disque de réception (12) est enfilé sur le porte-à-faux (31) de la douille (3).

6. Chaîne articulée selon l'une quelconque des revendications 1 à 5, **caractérisée en ce que** les languettes (1, 2) sont exécutées comme des demi-produits, en particulier du matériau plat ou de la tôle.

7. Chaîne articulée selon l'une quelconque des revendications 1 à 6, **caractérisée en ce que** la douille (3) et/ou l'axe (4) sont équipés d'au moins une ouverture de remplissage de lubrifiant (43).

8. Chaîne articulée selon l'une quelconque des revendications 1 à 7, **caractérisée en ce que** la douille (3) et/ou l'axe (4) sont équipés de dispositifs de réception de lubrifiant (44), en particulier de rainures, de surfaces ou de perçages.

9. Chaîne articulée selon l'une quelconque des revendications 1 à 8, **caractérisée en ce que** la douille (3) présente des rainures (32) radiales côté avant.

10. Chaîne articulée selon l'une quelconque des revendications 1 à 9, **caractérisée en ce que** l'espace de réception de joint d'étanchéité (11) est rempli d'un lubrifiant, en particulier d'huile.
